# EUROPEAN PATENT APPLICATION

(11) **EP 4 618 250 A1**
(43) Date of publication of application: **17.09.2025**
(21) Application number: 25162732.9
(22) Date of filing: 10.03.2025
(51) Int. Cl.: H01M 10/653, H01M 10/658, H01M 50/162, H01M 50/164, H01M 50/28, H01M 50/282, H01M 50/383

(54) **BATTERY MODULE AND BATTERY PACK**

(30) Priority: 12.03.2024 KR 20240034421
(71) Applicant: SAMSUNG SDI CO., LTD., Yongin-si, Gyeonggi-do 17084 (KR)
(72) Inventor: JUNG, Jung Kyun, 16678 Suwon-si (KR); KIM, Gang Yul, 16678 Suwon-si (KR)
(74) Representative: Marks & Clerk LLP

(57) **Abstract**

Disclosed are a battery module and a battery pack that can prevent flames generated in a battery cell in the battery module from spreading outside the battery cell. The battery module includes: a housing for receiving at least one battery cell; a top cover covering an opening of the housing; and an insulator disposed on at least one surface of the top cover, the insulator being formed to correspond to a shape of at least a portion of the at least one surface of the top cover.

## Description

### FIELD

The present disclosure relates to a battery module including an insulator and/or a battery pack.

### BACKGROUND

A battery cell can be charged and discharged unlike a primary cell that cannot be charged. Low-capacity battery cells are used in small, portable electronic devices, such as smartphones, feature phones, notebook computers, digital cameras, and camcorders, and high-capacity battery cells are widely used as power sources for motors in hybrid and electric vehicles and as power storage cells. Such a battery cell includes an electrode assembly of cathodes and anodes, a case receiving the electrode assembly, and electrode terminals connected to the electrode assembly.

Such battery cells contain highly reactive materials for charging and discharging, or can be easily heated by an external environment. In this case, the battery cells can experience increase in internal temperature in the event of internal short circuit due to overcharging or over-discharging. Moreover, the battery cells can experience increase in internal temperature upon increase in external temperature.

This section is intended only to provide a better understanding of the background of the technology described herein and thus may include information which is not necessarily prior art.

### SUMMARY

With advancements of science and increase in people's concern for the environment, the application of battery cells has expanded to a wide range of electronic devices close to people's daily lives, such as automobiles, smartphones, and the like. Therefore, for people's safety, it is necessary to prevent or mitigate a fire generated from battery cells and/or to prevent the fire from spreading outside the battery cell.

It is one aspect of the technology described herein to provide a battery module and/or a battery pack that prevents flames generated in the battery module and/or the battery pack from spreading outside of the battery module.

The above and other aspects and features of the technology described herein will become apparent from the following description of embodiments of the technology described herein.

In accordance with one aspect of the technology described herein, a battery module includes: a housing for receiving at least one battery cell; a top cover covering an opening of the housing; and an insulator disposed on one surface of the top cover, the insulator being formed to correspond to a shape of the one surface of the top cover.

In some embodiments, the insulator may comprise at least one insulating layer, the at least one insulating layer comprises a single insulating layer or a plurality of insulating layers stacked one above another.

In some embodiments, each of the at least one insulating layer may be formed to a thickness of 0.5 mm to 2.5 mm.

In some embodiments, the at least one insulating layer may comprise at least one material selected from the group consisting of aerogel, mica, vermiculite, talc, silica, quartz, rock wool, alumina, feldspar, kaolin, kieselguhr, perlite, natural fiber, glass fiber, glass wool, carbon fiber, graphite fiber, mineral fiber, and polymer fiber.

In some embodiments, the natural fiber may comprise fibers formed of at least one material selected from the group consisting of hemp, jute, flax, coir, wool, and cellulose.

In some embodiments, the mineral fiber may comprise fibers formed of at least one material selected from the group consisting of basalt, quartz, boron, ceramic, diorite, alumina, silica, slag, and rock.

In some embodiments, the polymer fiber may comprise at least one fiber selected from the group consisting of aramid fiber, polypropylene fiber, polyethylene fiber, polyester fiber, acrylic fiber, rayon fiber, and polyvinyl acetate fiber.

In some embodiments, the insulator may further comprise an insulating film formed on at least one surface of the at least one insulating layer.

In some embodiments, the insulating film may be vacuum-packed while surrounding the at least one insulating layer.

In some embodiments, the insulating film may be formed to a thickness of from 0.05 mm to 0.2 mm.

In some embodiments, the insulating film may comprise at least one material selected from the group consisting of aerogel, mica, vermiculite, talc, silica, quartz, rock wool, alumina, feldspar, kaolin, kieselguhr, perlite, natural fiber, glass fiber, glass wool, carbon fiber, graphite fiber, mineral fiber, and polymer fiber.

In some embodiments, the battery module may further comprise a bonding layer securing the insulator to the at least one surface of the top cover.

In some embodiments, the bonding layer may comprise at least one material selected from the group consisting of polyurethane, epoxy and polyolefin resins.

In some embodiments, the insulator may be formed to correspond to the shape of the at least one surface of the top cover by vacuum pressing.

In accordance with another aspect of the technology described herein, a battery pack includes: a battery module including at least one battery cell; a pack case receiving the battery module; and a pack insulator attached to at least one inner surface of the pack case, the pack insulator being formed to correspond to a shape of the at least one inner surface of the pack case.

In some embodiments, the pack insulator may comprise at least one insulating layer, the at least one insulating layer comprising single insulating layer or a plurality of pack insulating layers stacked one above another.

The at least one insulating layer may comprise at least one material selected from the group consisting of aerogel, mica, vermiculite, talc, silica, quartz, rock wool, alumina, feldspar, kaolin, kieselguhr, perlite, natural fiber, fiberglass, glass fiber, glass wool, carbon fiber, graphite fiber, mineral fiber, and polymer fiber.

In some embodiments, each of the at least one insulating layer may be formed to a thickness of 0.5 to 2.5 mm.

In some embodiments, the pack insulator may further comprise: a pack insulating film vacuum-packed while surrounding the at least one insulating layer.

In some embodiments, the pack insulating film may be formed to a thickness of 0.05 mm to 0.2 mm.

In some embodiments, the battery module may be the battery module according to any of the embodiments described herein.

According to the technology described herein, the battery module and/or the battery pack prevents flames generated in a battery cell from spreading outside the battery module and/or the battery pack.

However, aspects and features of the technology described herein are not limited to those described above and other aspects and features not mentioned will be clearly understood by those skilled in the art from the detailed description given below.

At least some of the above and other features of the invention are set out in the claims.

### BRIEF DESCRIPTION OF THE DRAWINGS

The following drawings attached to this specification illustrate embodiments of the technology described herein, and further describe aspects and features of the technology described herein together with the detailed description of the technology. Thus, the technology described herein should not be construed as being limited to the drawings:
FIGS. 1 to 4 are schematic cross-sectional views of lithium batteries according to one embodiment of the technology described herein;
FIG. 5 is a perspective view of a battery module according to one embodiment of the technology described herein;
FIG. 6 is a schematic exploded perspective view of the battery module according to the embodiment of the technology described herein;
FIG. 7A and FIG. 7B are views of a top cover and an insulator according to some embodiments of the technology described herein;
FIG. 8 is a sectional view of an insulator according to an embodiment of the technology described herein;
FIG. 9 is a sectional view of an insulator according to an embodiment of the technology described herein;
FIG. 10 is a sectional view of an insulator according to an embodiment of the technology described herein;
FIG. 11 is a perspective view of a battery pack according to an embodiment of the technology described herein;
FIG. 12 is a perspective view of the battery pack according to the embodiment of the technology described herein;
FIG. 13 is a view of a vehicle body and body parts according to an embodiment of the technology described herein; and
FIG. 14 is a side view of the vehicle body and body parts according to the embodiment of the technology described herein.

### DETAILED DESCRIPTION

Hereinafter, example embodiments of the technology will be described in detail with reference to the accompanying drawings. However, it should be understood that the following embodiments are provided by way of illustration and the technology described herein is not limited thereto and is defined only by the appended claims and equivalents thereto.

When an arbitrary element is referred to as being disposed (or placed or placed) "above" (or "below") or "on" (or "under") a component, it may mean that the arbitrary element is placed in contact with the upper (or lower) surface of the component and may also mean that another component may be interposed between the component and any arbitrary element disposed (or placed or placed) on (or under) the component

Throughout the specification, unless specified otherwise, each element may be singular or plural. In addition, throughout the specification, when "A and/or B" is stated, it means A, B, or A and B, unless specified otherwise.

As used herein, "combinations thereof" may refer to mixtures, stacks, composites, copolymers, alloys, blends, and reaction products of components.

Unless otherwise defined herein, particle diameter may refer to an average particle diameter. In addition, the particle diameter means an average particle diameter (D50) that refers to a particle diameter corresponding to 50% by volume in a volume cumulative variation of corresponding particles. The average particle diameter may be measured by any method well known in the art, for example, by a particle size analyzer, a transmission electron microscope image, or a scanning electron microscope image. Alternatively, the average particle diameter (D50) may be measured by counting the number of particles in each particle diameter range using a device employing a dynamic light-scattering method to analyze data, followed by calculating the average particle diameter (D50) based on the analyzed data. Alternatively, the average particle diameter (D50) may be measured by laser diffraction. More specifically, in measurement by laser diffraction, target particles are dispersed in a dispersant, introduced into a commercially available laser diffraction particle analyzer (for example, Microtrac MT 3000), and irradiated with ultrasound waves of about 28 kHz at a power of 60 W, followed by calculating the average particle size (D50) corresponding to 50% by volume in the cumulative volume variation of the particles in the measurement device.

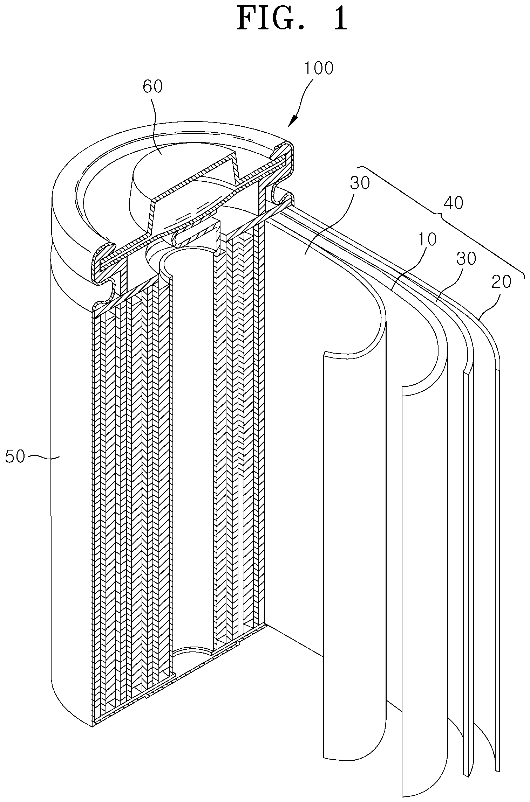

FIG. 1 to FIG. 4 are schematic cross-sectional views of lithium secondary batteries according to embodiments of the technology described herein.

### Lithium secondary battery

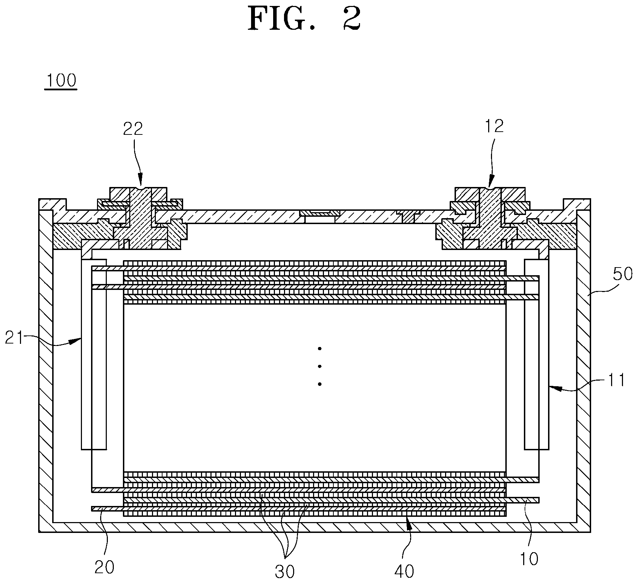

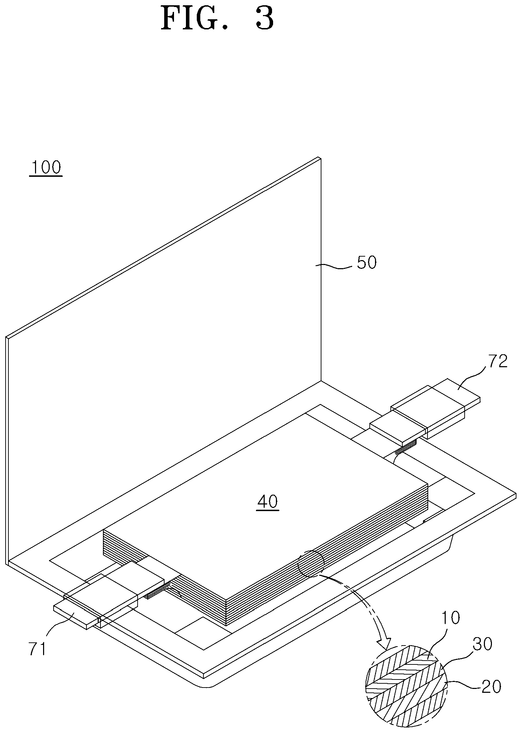

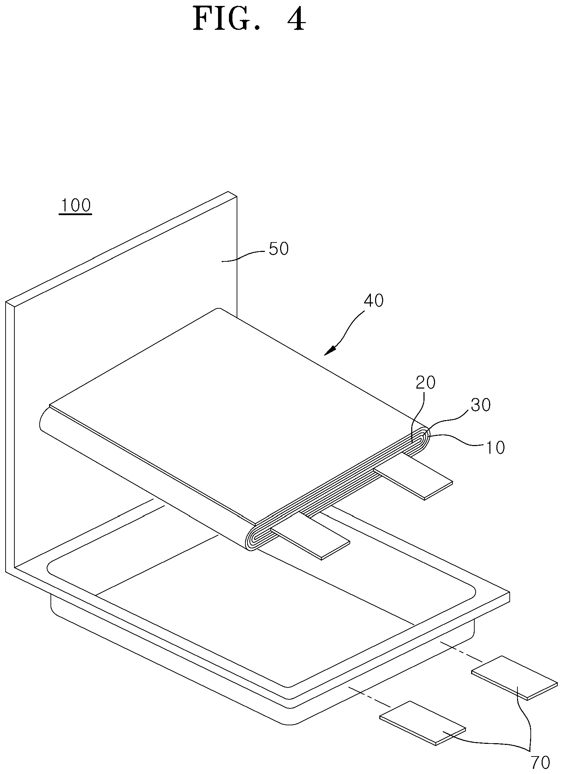

Lithium secondary batteries may be classified into types including a cylindrical secondary battery, a faceted secondary battery, a pouch type secondary battery, a coin type secondary battery, and the like based on the shapes thereof. FIGS. 1 to 4 are schematic views of lithium secondary batteries 100 according to some embodiments of the technology described herein, in which FIG. 1 shows a cylindrical secondary battery, FIG. 2 shows a faceted secondary battery, and FIG. 3 and FIG. 4 show pouch-type secondary batteries. Referring to FIGS. 1 to 4, a lithium secondary battery 100 may include an electrode assembly 40 in which a separator 30 is interposed between a cathode 10 and an anode 20, and a case 50 that receives the electrode assembly 40 therein. The cathode 10, the anode 20, and the separator 30 may be embedded in an electrolyte (not shown). The lithium secondary battery 100 may include a sealing member 60 that seals the case 50, as shown in FIG. 1. In addition, as shown in FIG. 2, the lithium secondary battery 100 may include a cathode lead tab 11, a cathode terminal 12, an anode lead tab 21, and an anode terminal 22. Referring to FIG. 3 and FIG. 4, the lithium secondary battery 100 may include electrode tabs 70, that is, a cathode tab 71 and an anode tab 72, which act as electrical pathways conducting current formed in the electrode assembly 40 to the outside of the electrode assembly 40.

### Cathode material

For the cathode material, a compound allowing reversible intercalation and deintercalation of lithium (lithiated intercalation compound) may be used. Specifically, the cathode material may be at least one complex oxide of a metal selected from among cobalt, manganese, nickel and combinations thereof with lithium.

The composite oxide may be a lithium transition metal composite oxide. Specifically, the composite oxide may be a lithium nickel oxide, a lithium cobalt oxide, a lithium manganese oxide, a lithium iron phosphate compound, a cobalt-free nickel-manganese oxide, or a combination thereof.

By way of example, the composite oxide may be a compound represented by any of the following formulas: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{d}X_{c}O_{2-α}D_{α} (0.90≤a≤1.8, 0≤b≤0.5, 0≤c≤0.5, 0<α<2); LiₐNi_{b}Co_{c}L¹ₐGₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂ (PO₄)₃ (0≤f≤2); and LiₐFePO₄ (0.90≤a≤1.8).

In the above formulas, A is Ni, Co, Mn, or a combination thereof; X is Al, Ni, Co, Mn, Cr, Fe, Mg, Sr, V, a rare-earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

In one embodiment, the cathode material may be a high nickel-content cathode material containing 80 mol% or more, 85 mol% or more, 90 mol% or more, 91 mol% or more, or 94 mol% to 99 mol% of nickel relative to 100 mol% of metal excluding lithium in the lithium transition metal complex oxide. The high nickel-content cathode material can achieve high capacity and thus can be applied to high capacity/high density lithium secondary batteries.

### Cathode

The cathode 10 for the lithium secondary battery 100 may include a current collector and a cathode material layer formed on the current collector. The cathode material layer includes a cathode material and may further include a binder and/or a conductive material.

In one embodiment, the cathode 10 may further include an additive capable of acting as a sacrificial cathode.

The cathode material may be present in an amount of 90 wt% to 99.5 wt% based on 100 wt% of the cathode material layer and each of the binder and the conductive material may be present in an amount of 0.5 wt% to 5 wt% based on 100 wt% of the cathode material layer.

The binder serves to attach cathode material particles to each other while attaching the cathode material to the current collector. The binder may include, for example, polyvinyl alcohol, carboxymethylcellulose, hydroxypropylcellulose, diacetylcellulose, polyvinyl chloride, carboxylated polyvinyl chloride, polyvinyl fluoride, polymers including ethylene oxide, polyvinyl pyrrolidone, polyurethane, polytetrafluoroethylene, polyvinylidene fluoride, polyethylene, polypropylene, styrene-butadiene rubbers, (meth)acrylated styrene-butadiene rubbers, epoxy resins, (meth)acrylic resins, polyester resins, Nylon, and the like, without being limited thereto.

The conductive material serves to impart conductivity to the electrodes and may be any electrically conductive material that does not cause chemical change in cells under construction. The conductive material may include, for example, carbon materials, such as natural graphite, artificial graphite, carbon black, acetylene black, Ketjen black, carbon fiber, carbon nanofibers, carbon nanotubes, and the like; metal-based materials in the form of metal powders or metal fibers containing copper, nickel, aluminum, silver, and the like; conductive polymers, such as polyphenylene derivatives and the like; and mixtures thereof.

The current collector may be Al, without being limited thereto.

### Anode material

The anode material includes a material allowing reversible intercalation/deintercalation of lithium ions, lithium metal, lithium metal alloy, a material capable of being doped to lithium and de-doped therefrom, and/or a transition metal oxide.

The material allowing reversible intercalation/deintercalation of lithium ions may include a carbon-based anode material, for example, crystalline carbon, amorphous carbon, or a combination thereof. The crystalline carbon may include, for example, graphite, such as natural graphite or artificial graphite, in amorphous, plate, flake, spherical, or fibrous form, and the amorphous carbon may include, for example, soft carbon, hard carbon, mesoporous pitch carbides, calcined coke, and the like.

The lithium metal alloy may be an alloy of lithium and a metal selected from among Na, K, Rb, Cs, Fr, Be, Mg, Ca, Sr, Si, Sb, Pb, In, Zn, Ba, Ra, Ge, Al and Sn may be used.

The material capable of being doped to lithium and de-doped therefrom may be an Si-based anode material or an Sn-based anode material. The Si-based anode material may be silicon, a silicon-carbon composite, SiOₓ (0<x<2), Si-Q alloys (where Q is selected from among alkali metals, alkali-earth metals, Group XIII elements, Group XIV elements (excluding Si), Group XV elements, Group XVI elements, transition metals, rare-earth elements, and combinations thereof), or combinations thereof. The Sn-based anode material may be Sn, SnO₂, an Sn alloy, or a combination thereof.

The silicon-carbon composite may be a composite of silicon and amorphous carbon. According to one embodiment, the silicon-carbon composite may be prepared in the form of silicon particles having an amorphous carbon coating formed on the surface thereof. For example, the silicon-carbon composite may include secondary particles (cores) composed of primary silicon particles and an amorphous carbon coating layer (shell) formed on the surface of the secondary particle. The amorphous carbon may also be placed between the primary silicon particles such that, for example, the primary silicon particles are coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer formed on the core.

The Si-based anode material or the Sn-based anode material may be used in combination with the carbon-based anode material.

### Anode

The anode 20 for the lithium secondary battery 100 may include a current collector and an anode material layer formed on the current collector. The anode material layer includes an anode material and may further include a binder and/or a conductive material.

For example, the anode material layer may include 90 wt% to 99 wt% of the anode material, 0.5 wt% to 5 wt% of the binder, and 0 wt% to 5 wt% of the conductive material.

The binder serves to attach the anode material particles to each other while attaching the anode material to the current collector. The binder may be a non-aqueous binder, an aqueous binder, a dry binder, or a combination thereof.

The non-aqueous binder includes polyvinyl chloride, carboxylated polyvinyl chloride, polyvinyl fluoride, ethylene propylene copolymers, polystyrene, polyurethane, polytetrafluoroethylene, polyvinylidene fluoride, polyethylene, polypropylene, polyamideimide, polyimide, or combinations thereof.

The aqueous binder may be selected from the group consisting of styrene-butadiene rubbers, (meth)acrylated styrene-butadiene rubbers, (meth)acrylonitrile-butadiene rubbers, (meth)acrylic rubbers, butyl rubbers, fluorinated rubbers, polyethylene oxide, polyvinyl pyrrolidone, polyepichlorohydrin, polyphosphazene, poly(meth)acrylonitrile, ethylene propylene diene copolymers, polyvinyl pyridine, chlorosulfonated polyethylene, latex, polyester resins, (meth)acryl resins, phenol resins, epoxy resins, polyvinyl alcohol, and combinations thereof.

When the aqueous binder is used as the anode binder, a cellulose-based compound capable of imparting viscosity may be further included. The cellulose-based compound may be a mixture of carboxymethylcellulose, hydroxypropyl methylcellulose, methylcellulose, or alkali metal salts thereof. The alkali metal may be Na, K, or Li.

The dry binder may be a fibrous polymeric material and may include, for example, polytetrafluoroethylene, polyvinylidene fluoride, a polyvinylidene fluoride-hexafluoropropylene copolymer, polyethylene oxide, or a combination thereof.

The conductive material serves to impart conductivity to the electrodes and may be any electronically conductive material that does not cause chemical change in cells under construction. Specifically, the conductive material may include, for example, carbon materials, such as natural graphite, artificial graphite, carbon black, acetylene black, Ketjen black, carbon fibers, carbon nanofibers, carbon nanotubes, and the like; metal-based materials in the form of metal powders or metal fibers containing copper, nickel, aluminum, silver, and the like; conductive polymers, such as polyphenylene derivatives and the like; or mixtures thereof.

The anode current collector may be selected from copper foil, nickel foil, stainless steel foil, titanium foil, nickel foam, copper foam, a conductive metal-coated polymer base, and combinations thereof.

### Electrolyte (not shown)

The electrolyte for the lithium secondary battery 100 includes a non-aqueous organic solvent and a lithium salt.

The non-aqueous organic solvent acts as a medium through which ions involved in electrochemical reaction of a cell can move.

The non-aqueous organic solvent may be a carbonate-based solvent, an ester-based solvent, an ether-based solvent, a ketone-based solvent, an alcohol-based solvent, a non-amphoteric solvent, or a combination thereof.

The carbonate-based solvents may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like.

The ester-based solvents may include methyl acetate, ethyl acetate, n-propyl acetate, dimethyl acetate, methyl propionate, ethyl propionate, decanolide, mevalonolactone, valerolactone, caprolactone, and the like.

The ether-based solvents may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone and the like. The alcohol-based solvents may include ethyl alcohol, isopropyl alcohol, and the like, and the non-amphoteric solvent may include nitriles, such as R-CN (where R is a straight, branched or cyclic hydrocarbon group having 2 to 20 carbon atoms and may include double bonds, aromatic rings, or ether groups); amides, such as dimethylformamide; dioxolanes, such as 1,3-dioxolane, 1,4-dioxolane, and the like; sulfolanes; and the like.

The non-aqueous organic solvent may be used alone or as a mixture thereof.

In use of the carbonate-based solvent, a mixture of a cyclic carbonate and a chained carbonate may be used, and the cyclic carbonate and the chained carbonate may be mixed in a volume ratio of 1: 1 to 1:9.

The lithium salt is a substance that is soluble in an organic solvent and serves as a source of lithium ions in a battery, enabling operation of a basic lithium secondary battery while facilitating transfer of the lithium ions between the cathode and the anode. Examples of the lithium salts may include at least one selected from among LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethane sulfonate, lithium difluorobis(oxalato)phosphate (LiDFOB), and lithium bis(oxalato)borate (LiBOB).

### Separator

Depending on the type of lithium secondary battery 100, the separator 30 may be interposed between the cathode 10 and the anode 20. For such a separator 30, polyethylene, polypropylene, polyvinylidene fluoride, or at least two layers thereof may be used as well as mixed layers, such as a polyethylene/polypropylene bilayer separator, a polyethylene/polypropylene/polyethylene trilayer separator, a polyethylene/polyethylene/polypropylene trilayer separator, and the like.

The separator 30 may include a porous substrate and a coating layer that includes an organic material, an inorganic material, or a combination thereof on one or both surfaces of the porous substrate.

The porous substrate may be a polymer layer formed of a polymer selected from among polyolefins, such as polyethylene polypropylene, and the like, polyesters, such as polyethylene terephthalate, polybutylene terephthalate, and the like, polyacetal, polyamides, polyimides, polycarbonates, polyether ketones, polyarylether ketones, polyetherimides, polyamideimides, polybenzimidazole, polyethersulfone, polyphenylene oxides, cyclic olefin copolymers, polyphenylene sulfides, polyethylene naphthalate, glass fiber, Teflon, and polytetrafluoroethylene, copolymers thereof, or mixtures thereof.

The organic material may include a polyvinylidene fluoride polymer or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, without being limited thereto.

The organic material and the inorganic material may be present in a mixed state in one coating layer or may be present in the form of a stack structure of a coating layer including the organic material and a coating layer including the inorganic material.

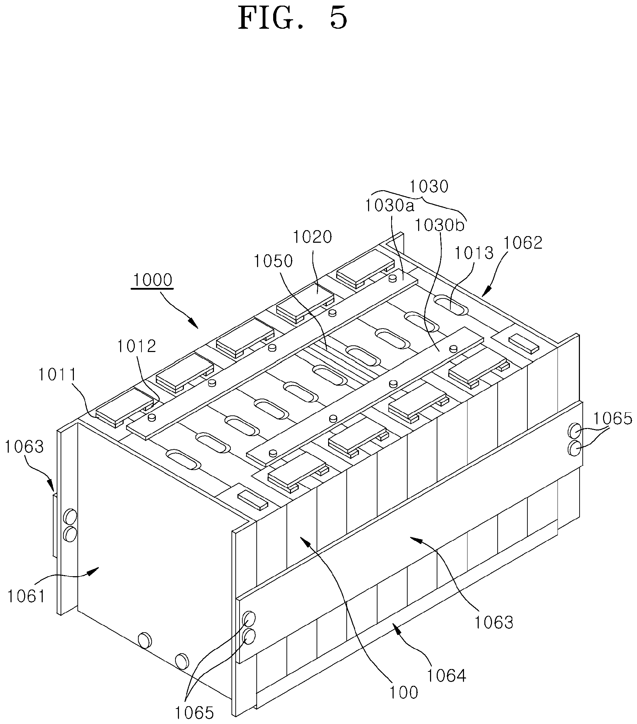

FIG. 5 is a perspective view of a battery module 1000 according to one embodiment of the technology described herein.

The battery module 1000 according to one embodiment of the technology described herein includes a plurality of battery cells 100, a housing (including portions thereof that together form the housing) 1061, 1062, 1063, 1064, 1065 that receives the plurality of battery cells 100 therein, and a busbar electrically connecting at least some of the plurality of battery cells 100 to each other.

The plurality of battery cells 100 may include, for example, the battery cells illustrated in FIGS. 1 to 4, and may be arranged in one direction and received within the housing.

The housing may include a pair of end plates 1061, 1062 facing wide surfaces of the battery cells 100, and side plates 1063 and a bottom plate 1064 each connecting the pair of end plates 1061, 1062 to each other. The side plates 1063 may support side surfaces of each of the battery cells 100 and the bottom plate 1064 may support a bottom surface of each of the battery cells 10. In addition, the pair of end plates 1061, 1062, the side plates 1063 and the bottom plates 1064 may be connected to one another by members, such as bolts 1065 or the like.

The battery module 100 includes terminals 1011, 1012, connection tabs 1020 connecting adjacent battery cells 100 to each other, and a protection circuit module 1030 connected at one side thereof to the connection tabs 1020. The protection circuit module 1030 may be a battery management system (BMS). The connection tabs 20 may be busbars.

Each of the battery cells 100 may be provided at one side thereof with terminals 1011, 1012 electrically connected to the connection tab 1020 and may be formed with a vent 13, which is a discharge channel of gas generated therein. The terminals 1011, 1012 of the battery cell 100 may be a cathode terminal 1011 and an anode terminal 1012, respectively, and the terminals 1011, 1012 of adjacent battery cells 100 may be electrically connected in series or in parallel by the connection tab 1020 described below. Although series connection is described above by way of example, it should be understood that various connection structures may be used, as needed. In addition, it should be understood that the number and arrangement of battery cells are not limited to the structure of FIG. 3 and may be changed, as needed.

The protection circuit module 1030 may have electronic components and protection circuits mounted thereon and may be electrically connected to the connection tabs 1020 described below. The protection circuit module 1030 may include a first protection circuit module 1030a and a second protection circuit module 1030b extending from different locations in an arrangement direction of the battery cells 100, in which the first protection circuit module 1030a and the second protection circuit module 1030b may be spaced apart parallel to each other by a constant distance and each may be electrically connected to the connection tabs 1020 adjacent thereto. For example, the first protection circuit module 1030a extends at one side of upper portions of the plurality of battery cells 100 in the arrangement direction of the battery cells 100 and the second protection circuit module 1030b extends at the other side of the upper portion of the battery cells 100 in the arrangement direction of the battery cells 100 such that the second protection circuit module 1030b is spaced apart from the first protection circuit module 1030a, with the vents 1013 disposed therebetween, while being parallel to the first protection circuit module 1030a. As such, the two protection circuit modules are spaced apart from each other in the arrangement direction of the battery cells 100, thereby minimizing the area of the printed circuit board (PCB) constituting the protection circuit module 1030. An unnecessary protection circuit module area is minimized by dividing the protection circuit module 1030 into two separate protection circuit modules. In addition, the first protection circuit module 1030a and the second protection circuit module 1030b may be connected to each other by a conductive connection member 1050. The connection member 1050 is connected at one side thereof to the first protection circuit module 1030a and at the other side thereof to the second protection circuit module 1030b, whereby the two protection circuit modules can be electrically connected.

The connection may be realized by any one of soldering, resistance welding, laser welding, and/or projection welding.

The connection member 1050 may be, for example, an electrical wire. In addition, the connecting member 1050 may include an elastic or flexible material. Through the connection member 1050, the voltage, temperature, and current of the battery cells 100 can be checked and managed to be normal. That is, information, such as voltage, current, and temperature, received by the first protection circuit module 1030a from the connection tabs adjacent thereto and information, such as voltage, current, and temperature, received by the second protection circuit module 1030b from the connection tabs adjacent thereto may be integrated and managed by the protection circuit module through the connection member.

In addition, upon swelling of the battery cells 100, impact can be absorbed by elasticity or flexibility of the connection member 1050 to prevent damage to the first and second protection circuit modules 1030a, 1030b

Further, the shape and structure of the connecting member 1050 are not limited to those shown in FIG. 5.

As such, the structure of the protection circuit module 1030 divided into the first and second protection circuit modules 1030a, 1030b can secure an interior space of the battery module by minimizing the area of the PCB that constitutes the protection circuit module. As a result, it is possible to improve work efficiency by facilitating not only operation of connecting the connection tabs 1020 to the protection circuit module 1030, but also repair upon detection of failure of the battery module.

Referring to FIGS. 1 to 5, the battery cell 100 (including, for example, the lithium secondary cell 100 illustrated in FIGS. 1 to 4) and/or the battery module 1000 including a plurality of battery cells 100 according to the embodiments of the technology described herein have been described above in detail.

Due to the structure of the battery cell 100, which is repeatedly charged or discharged once or more, the battery cell 100 may contain highly reactive materials. Accordingly, the probability of a fire occurring inside the battery cell 100 can increase with repeated charging and discharging. In addition, the battery cell 100 can be subjected to swelling as the battery cell 100 is repeatedly charged and discharged. As a result, the pressure on other battery cells adjacent to the battery cell 100 can increase, thereby causing increase in temperature of the battery cell and/or occurrence of fire.

The battery module 1000 includes the plurality of battery cells 100. Accordingly, when a fire occurs in the battery cell 100, the fire can leak from the battery module 1000. Thus, the following description will focus on the structure capable of preventing a fire from spreading to the outside of the battery module 1000 and/or reducing the quantity of fire spreading to the outside of the battery module 1000 in the event of fire occurrence in the battery cell 100.

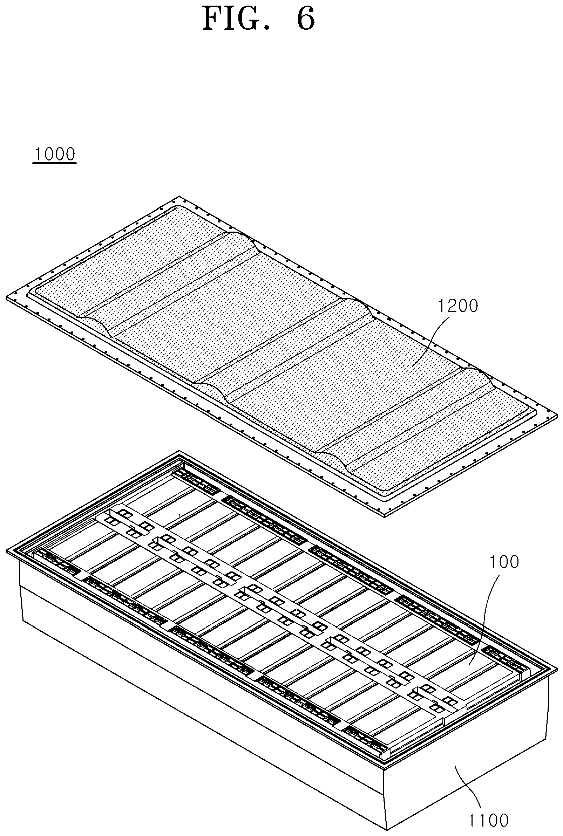

FIG. 6 is a schematic exploded perspective view of a battery module 1000 according to one embodiment of the technology described herein.

In FIG. 6, reference numeral 1000 indicates a battery module according to one embodiment of the technology described herein. The battery module 1000 includes a housing 1100 and a top cover 1200.

The housing 1100 provides a space in which a plurality of battery cells 100 is received. The housing 1100 may include a polymer material for weight reduction of the battery module. Alternatively, the housing 1100 may include iron (Fe) to provide mechanical rigidity. Alternatively, the housing 1100 may include, for example, aluminum (Al) for light weight and rigidity. Alternatively, the housing 1100 may include at least two materials among a polymer material, a ferrous metal including iron, and a non-ferrous metal including aluminum. In these embodiments, the housing 1100 may include different materials in different regions. The description of the housing 1100 is the same as or similar to the description of the housing illustrated, for example, in FIG. 5.

The housing 1100 includes a space receiving the battery cells 100. Specifically, the housing 1100 includes a bottom surface and side surfaces adjoining an edge of the bottom surface. For example, the housing 1100 includes a polygonal or circular bottom surface and side surfaces perpendicularly adjoining the bottom surface while surrounding the edge of the bottom surface. However, it should be understood that the shape of the housing 1100 is not limited thereto and the housing 1100 may be formed in any shape that receives the battery cells 100 therein. With this structure, the housing 1100 defines a space for receiving the battery cell 100 in the bottom surface and the side surfaces thereof.

The housing 1100 includes an opening through which the battery cells 100 are introduced into or removed from the housing 1100. For example, the opening may be placed to face the bottom surface of the housing 1100 and may be defined by the side surfaces of the housing 1100. That is, the housing 1100 may adjoin the bottom surface at one side surface thereof and may form the opening at the other side surface thereof.

The top cover 1200 covers the opening of the housing 1100. For example, the top cover 1200 may be inserted into the opening of the housing 1100 to be secured thereto or may be secured to the housing 1100 while covering the opening of the housing 100 through a fastener that engages with the housing 1100. In this structure, the top cover 1200 may be coupled to the opening of the housing 1100 to be spaced apart from the battery cells 100 by a predetermined distance. With this structure, the top cover 1200 can prevent downward pressure from being further applied to the battery cells 100 upon swelling of the battery cells 100.

The top cover 1200 can prevent flames generated inside the battery module 1000 from spreading outside by covering the opening of the housing 1100.

To this end, the top cover 1200 may include, for example, iron. Additionally or alternatively, the top cover 1200 may include steel. With this structure, the top cover 1200 can further suppress flames generated from the battery cell 100. Alternatively, the top cover 1200 may include the same material as the housing 1100 to maintain the same or similar rigidity to the housing 1100. However, it should be understood that the material for the top cover 1200 is not limited thereto.

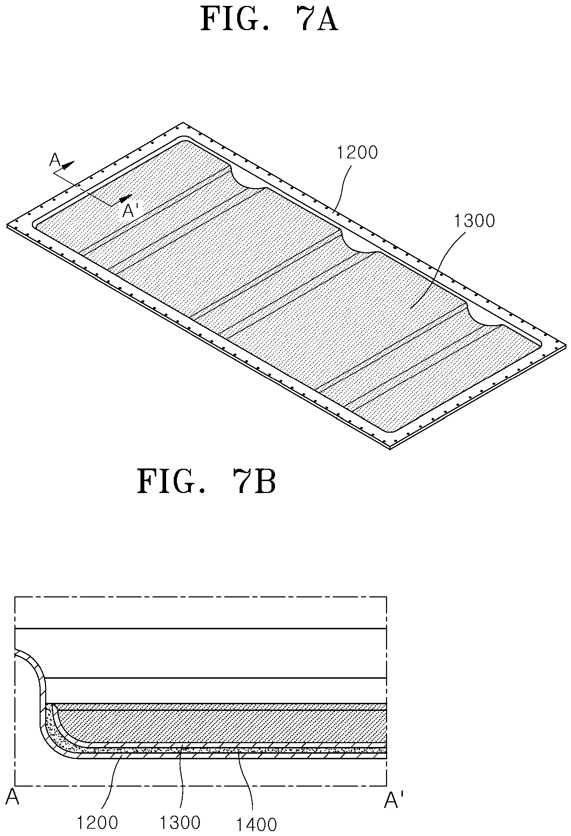

The battery module 1000 according to the embodiment of the technology described herein may further include an insulator 1300 (see FIG. 7) to further prevent flames generated within the battery module 1000 from spreading outside. The insulator 1300 may include an insulating and/or fireproofing material. As a result, the insulator 1300 can further prevent a fire generated inside the battery cell 100 from spreading outside the battery cell 100.

With this configuration, the battery module 1000 according to the embodiment of the technology described herein can prevent fire generated from the battery cell 100 from spreading outside the battery cell. In the following description, the insulator 1300 will be described in more detail.

FIG. 7A and FIG. 7B are views of a top cover 1200 and an insulator 1300 according to some embodiments of the technology described herein.

FIG. 7A is a perspective view of the top cover 1200 and the insulator 1300 disposed on at least a portion of the top cover 1200 according to the embodiment of the technology described herein. FIG. 7B is a cross-sectional view taken along line A-A' in FIG. 7A.

As shown in FIG. 6, the battery module 1000 according to the embodiment includes the housing 1100, the top cover 1200, and the insulator 1300.

Referring to FIG. 7A, the insulator 1300 is disposed on at least one surface of the top cover 1200. For example, the insulator 1300 may be disposed on a bottom surface of the top cover 1200. Here, the bottom surface of the top cover 1200 faces the battery cells 100. As a result, the insulator 1300 can directly contact a fire generated from the battery cell 100 to primarily prevent the fire from spreading outside. Additionally or alternatively, for example, the insulator 1300 may be disposed on an upper surface of the top cover 1200. Here, the upper surface of the top cover 1200 does not face the battery cells 100. In this case, the insulator 1300 can secondarily prevent spreading of fire primarily prevented from spreading outside by the top cover 1200. In some embodiments, for example, the insulators 1300 may be disposed on the upper surface and the bottom surface of the top cover 1200, respectively. As a result, the insulators 1300 can prevent a fire generated from the battery cells 100 from spreading outside the battery cells 100.

Referring to FIG. 7B, the insulator 1300 may be formed corresponding to a shape of at least a portion of at least one surface of the top cover 1200. For example, a portion of the one surface of the top cover 1200 may be formed as a curved surface. In this structure, a region of the insulator 1300 corresponding to the portion of the one surface of the top cover 1200 may be formed as a curved surface. Accordingly, the curved region of the insulator 1300 is formed in the same shape as or a similar shape to the curved region of the top cover 1200 so as to engage therewith.

Specifically, the insulator 1300 may be manufactured in 2D sheet form. In this structure, the insulator 1300 is attached in the form of a 2D sheet to the interior and/or the exterior of the battery module 1000. Alternatively, the insulator 1300 may be three-dimensionally formed from the 2D sheet through a vacuum pressing process. For example, the sheet-shaped insulator 1300 is disposed on a mold, with a vacuum pump disposed at one side thereof. The insulator 1300 is pressed into the shape of the mold and/or a punch by the punch that applies pressure to the mold. Here, the vacuum pump discharges air present between the mold and the punch such that the insulator 1300 can be subjected to greater force by the punch. Accordingly, the insulator 1300 may be formed into a 3D shape. Furthermore, the insulator 1300 enables weight reduction of the battery module.

Referring to FIG. 7B, the battery module 1000 may further include a bonding layer 1400 that secures the insulator 1300 to one surface of the top cover 1200. The bonding layer 1400 is, in some embodiments, for example, a double-sided bonding tape. Alternatively, the bonding layer 1400 is, for example, a bond that is deposited in a liquid phase to a target and solidifies. The bonding layer 1400 may include at least one selected from the group consisting of, for example, polyurethane, epoxy and polyolefin resins.

With this arrangement and/or shape, the insulator 1300 can prevent flames from being released outside from the battery module 1000.

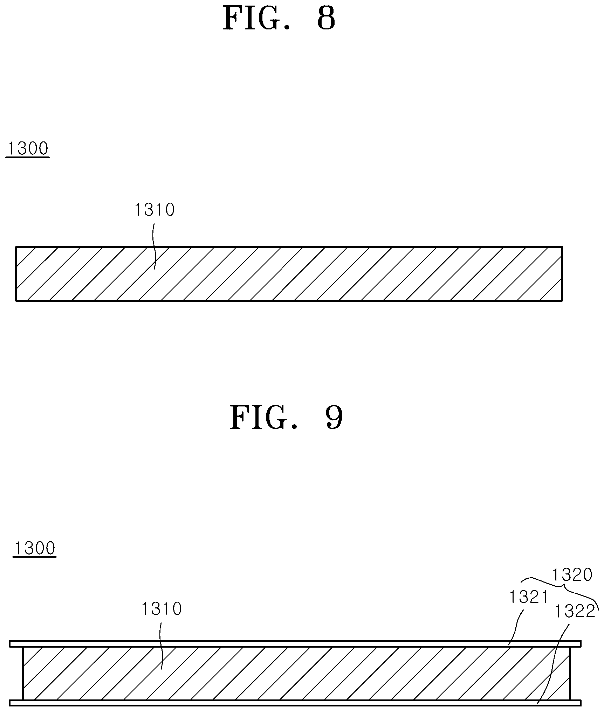

FIG. 8 is a sectional view of an insulator 1300 according to an embodiment of the technology described herein.

As shown in FIG. 7A and/or FIG. 7B, the insulator 1300 may be formed in 2D sheet form or 3D form, which corresponds to the shape of the top cover 1200. FIG. 8 shows the structure or material of the insulator 1300 that allows the insulator 1300 to be more efficiently formed into a 3D shape and/or can further improve an insulating effect.

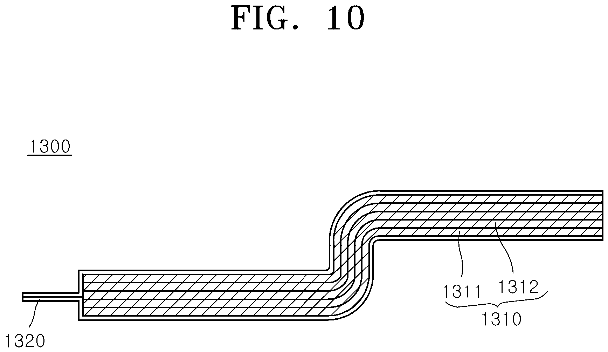

Referring to FIG. 8, the insulator 1300 includes an insulating layer 1310. For example, the insulator 1300 may include a single insulating layer 1310, as shown in FIG. 8, or may include a plurality of insulating layers 1310 stacked one above another, for example, as shown in FIG. 10.

The insulating layer 1310 includes, for example, an insulating and/or fireproofing material. For example, the insulating layer 1310 includes at least one material selected from the group consisting of aerogel, mica, vermiculite, talc, silica, quartz, rock wool, alumina, feldspar, kaolin, kieselguhr, and perlite. With this structure, the insulator 1300 can prevent flames generated inside the battery module 1000 from reaching the outside of the battery module 1000.

Alternatively, the insulating layer 1310 includes an insulating and/or fireproofing material formed in the form of fibers. For example, the insulating layer 1310 includes fibers formed of at least one material selected from the group consisting of aerogel, mica, vermiculite, talc, silica, quartz, rock wool, alumina, feldspar, kaolin, kieselguhr, and perlite. Alternatively, for example, the insulating layer 1310 includes at least one material selected from the group consisting of natural fiber, glass fiber, glass wool, carbon fiber, graphite fiber, mineral fiber, and polymer fiber. In some embodiments, the natural fiber includes fibers formed of at least one material selected from the group consisting of hemp, jute, flax, coir, sheep wool, and cellulose. The mineral fiber includes fibers formed of at least one material selected from the group consisting of basalt, quartz, boron, ceramic, diorite, alumina, silica, slag, and rock. The polymer fiber includes at least one fiber selected from the group consisting of aramid fiber, polypropylene fiber, polyethylene fiber, polyester fiber, acrylic fiber, rayon fiber, and polyvinyl acetate fiber. With this material, the insulator 1300 can be more efficiently processed into a 3D shape while still preventing flames generated inside the battery module 1000 from being released to the outside.

Alternatively, the insulating layer 1310 may be formed of a combination of at least two of the insulating and/or fireproofing materials or the insulating and/or fireproofing materials formed in the form of fibers. For example, the insulating layer 1310 may include alumina, silica, and a small amount of inorganic materials, for example, 47 wt% to 49 wt% of alumina, 50 wt% to 52 wt% of silica, and 0.5 wt% or less of inorganic materials. For example, the inorganic materials may comprise all types of inorganic substances including alumina and/or silica. Alternatively, for example, the insulating layer 1310 may include less than 10 ppm of leachable chloride.

Alternatively, the insulating layer 1310 may include 35% FibaRoll Ph(e.g. fibaroll ph SMC). Alternatively, the insulating layer 1310 may be formed by impregnating the top cover 1200 with a silicone-based liquid. Alternatively, the insulating layer 1310 may be formed by coating the top cover 1200 with an insulating and/or fireproofing material. With this structure, the insulating layer 1310 can prevent the fire from traveling even without assistance of an insulating film 1320 described below. At the same time, the insulating layer 1310 may have good high temperature resistance.

Each of the insulating layers 1310 may be formed to a thickness of, for example, 0.5 mm to 2.5 mm. If the thickness of each of the insulating layers 1310 is less than 0.5 mm, the insulator 1300 cannot properly perform an insulating and/or fireproofing function. Further, if the thickness of each of the insulating layers 1310 is less than 0.5 mm, the insulator 1300 cannot maintain the 3D shape of the insulator 1300. On the other hand, if the thickness of each of the insulating layers 1310 is 2.5 mm or more, the insulator 1310 can become too thick, causing an excessive increase in volume of the battery module 1000. Preferably, each of the insulating layers 1310 is formed to a thickness of, for example, 1 mm to 2.5 mm. With this structure, the insulator 1300 can be more efficiently processed into a 3D shape and can prevent increase in volume of the battery module 1000 while still preventing flames generated inside the battery module 1000 from being released to the outside of the battery module 1000.

FIG. 9 is a sectional view of an insulator 1300 according to an embodiment of the technology described herein.

Referring to FIG. 9, the insulator 1300 includes an insulating layer 1310 and an insulating film 1320 formed on at least one surface of the insulating layer 1310.

The insulating film 1320 may be formed on at least one surface of the insulating layer 1310 to prevent scattering from the insulating layer 1310. To this end, when the insulating layer 1310 is formed by stacking a plurality of insulating layers, the insulating film 1320 may be formed on at least a portion of the outermost surface of the stacked insulating layers 1310. For example, the insulating film 1320 may be formed on an upper surface of the insulating layer 1310 (for example, a first insulating film 1321) or on a lower surface of the insulating layer 1310 (for example, a second insulating film 1322), as shown in FIG. 9. Alternatively, the insulating film 1320 may be formed on a side surface of the insulating layer 1310 formed by stacking the insulating layers.

For example, the insulating film 1320 may include a first insulating film 1321 and/or a second insulating film 1322. The first insulating film 1321 may be disposed on the upper surface of the insulating layer 1310. In addition, the second insulating film 1322 may be disposed on the lower surface of the insulating layer 1310. The first insulating film 1321 and the second insulating film 1322 may be pressed against each other toward the insulating layer 1310. With this structure, the first insulating film 1321 and the second insulating film 1322 may be vacuum-packed while surrounding the insulating layer 1310.

Alternatively, for example, the insulating film 1320 may be applied to at least one surface of the insulating layer 1310 in a liquid state. The insulating film 1320 may surround at least a portion of the outer surface of the insulating layer 1310 as the insulating film solidifies from the liquid state.

The insulating film 1320 may include the same material as or a similar material to the insulating layer 1310 to further improve insulating and/or fireproofing performance of the insulator 1300. For example, the insulating film 1320 may include at least one material selected from the group consisting of aerogel, mica, vermiculite, talc, silica, quartz, rock wool, alumina, feldspar, kaolin, kieselguhr, perlite, natural fiber, glass fiber, glass wool, carbon fiber, graphite fiber, mineral fiber, and polymer fiber. With this structure, the insulating film 1320 can further improve insulating and/or fireproofing performance of the insulator 1300 and can prevent flames generated inside the battery module 1000 from being released outside of the battery module 1000.

The insulating film 1320 may be formed to a thickness of, for example, 0.05 mm to 0.2 mm. If the thickness of the insulating film 1320 is less than 0.05 mm, the insulating film 1320 can be easily damaged or torn. Moreover, if the thickness of the insulating film 1320 is less than 0.05 mm, the insulating film 1320 cannot prevent the insulating film 1320 from scattering from the insulating layer 1310. If the thickness of the insulating film 1320 is greater than 0.2 mm, the insulating film 1320 can cause an excessive increase in volume of the battery module 1000. The insulating film 1320 may be formed to a thickness of, for example, about 0.1 mm. With this structure, the insulating film 1320 can effectively prevent dust from blowing away from the insulating layer 1310 while still achieving insulating and/or fireproofing performance.

FIG. 10 is a sectional view of an insulator 1300 according to an embodiment of the technology described herein.

FIG. 10 shows one example of the insulator 1300 described with reference to FIGS. 6 to 9. As described above, the insulator 1300 may include a single insulating layer 1310 or a plurality of insulating layers 1310 stacked one above another and an insulating film 1320 formed on at least one surface of the insulating layers 1310.

For example, referring to FIG. 10, the insulating layer 1310 may be formed by stacking a plurality of layers and may include, for example, a first insulating layer 1311 and a second insulating layer 1312. The second insulating layer 1312 may be stacked on the first insulating layer 1311. The second insulating layer 1312 may include the same material as or a different material from the first insulating layer 1311. That is, the plurality of insulating layers 1310 may include the same material or different materials. Similarly, the second insulating layer 1312 may be formed to the same or similar thickness to the first insulating layer 1311 for convenience of manufacture/production. Alternatively, when the second insulating layer 1312 and the first insulating layer 1311 include different materials, the second insulating layer 1312 may be formed to a different thickness than the first insulating layer 1311.

Referring to FIG. 10, the insulating film 1320 surrounds at least a portion of an outer periphery of the insulating layers 1310 stacked one above another. Alternatively, as shown in FIG. 9, the insulating film 1320 surrounds at least a portion of an outer periphery of the insulating layer 1310 composed of a single layer. The insulating film 1320 can protect the insulating layer 1310 while pressing the insulating layer 1310. With this structure, the insulating film 1320 can improve insulating and/or fireproofing performance of the insulator 1300. In addition, the insulating film 1320 may contribute to reduction in weight of the insulator 1300. Further, the insulating film 1320 can prevent scattering from the insulator 1300.

With this configuration, the battery module 1000 according to the embodiment of the technology described herein can effectively prevent flames generated inside the battery module 1000 from spreading to the outside of the battery module 1000.

In the following description, a pack insulator having the same or similar performance and shape as the insulator 1300 and a battery pack 2000 including such a pack insulator will be described.

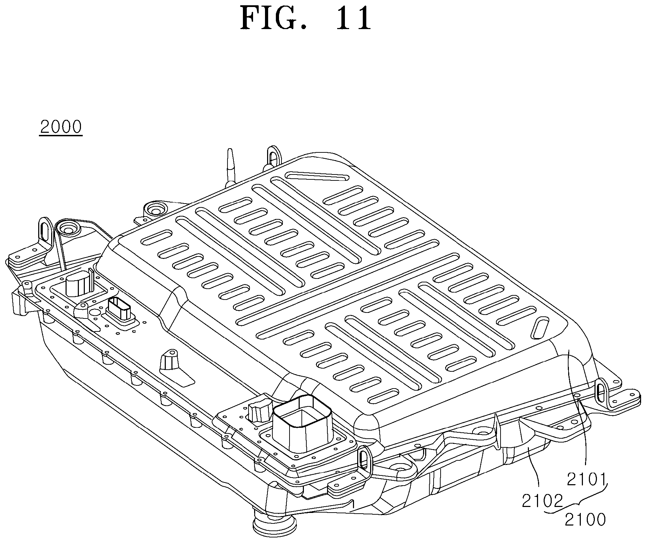

FIG. 11 is a perspective view of a battery pack 2000 according to an embodiment of the technology described herein.

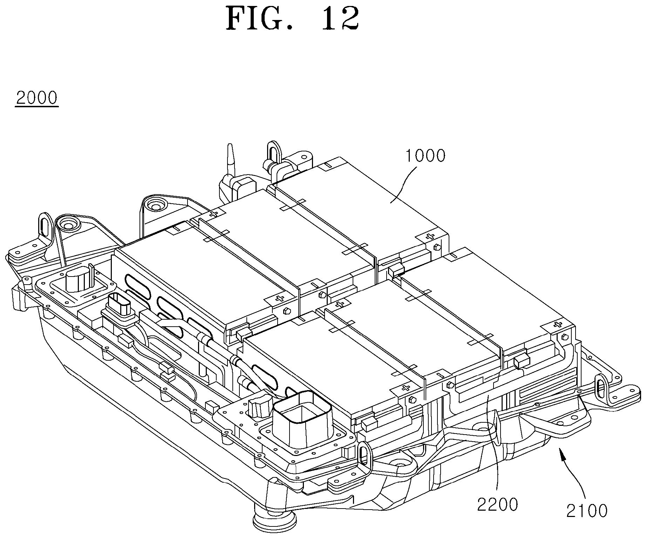

FIG. 12 is a perspective view of the battery pack 2000 according to the embodiment of the technology described herein.

A battery pack 2000 according to one embodiment of the technology described herein includes an aggregate of individual batteries electrically connected to each other and a pack case receiving the batteries. For convenience of illustration, components, such as a busbar, a cooling unit, and an external terminal for electrical connection of the batteries are omitted.

Specifically, the battery pack 2000 may include a plurality of battery modules 1000 (including, for example, the battery modules 1000 illustrated in FIG. 5 to FIG. 10) and a pack case 2100 receiving the battery modules 1000 therein. The battery module 1000 may include the battery cells 100 illustrated in FIG. 1 to FIG. 4, as described above.

The plurality of battery modules 1000 may be connected to each other in series or in parallel.

For example, the pack case 2100 may include first and second pack cases 2101, 2102 coupled to each other so as to face each other with the plurality of battery modules 1000 interposed therein. The plurality of battery modules 1000 may be electrically connected to each other through busbars 2200 and may be electrically connected to each other in series/parallel or in a mixed series/parallel manner to achieve required electrical output.

Although not shown in the drawings, the battery pack 2000 further includes a cooling member to inhibit degradation of the battery cells 100. The cooling member may be disposed at a lower portion of a compartment in which the battery cells 100 are received, without being limited thereto. Alternatively, the cooling member may be disposed at an upper portion of the compartment or on a side surface thereof depending on the battery pack 2000.

Although not shown in the drawings, the battery pack 2000 may include a battery management device (system) (BMS) for managing the battery cells 100 and/or the battery module 1000. The battery management device may include a detection device, a balancing device, and a control device.

Although not shown in the drawings, the battery pack 2000 may further include the detection device. The detection device may detect a state (voltage, current, temperature, or the like) of the battery pack 2000 to detect state information indicative of the state of the battery pack 2000. The detection device may detect a voltage of each of the battery cells 100 or the battery modules 1000 constituting the battery pack 2000. The detection device may also detect a current flowing through the battery module 1000 or each of the battery modules 1000 constituting the battery pack 2000. The detection device may also detect a temperature of the battery cells 100 and/or the battery modules 1000 and/or an ambient temperature at at least one point in the battery pack 2000.

Although not shown in the drawings, the battery pack 2000 may further include the balancing device. The balancing device may perform balancing operation of the battery modules 1000 and/or the battery cells 100 constituting the battery pack 2000. The control device (not shown) may receive the status information (voltage, current, temperature, and the like) of the battery modules 1000 from the detection device. The control device may monitor and calculate the state (voltage, current, temperature, state of charge (SOC), state of health (SOH), and the like) of the battery module 1000 based on the state information received from the detection device. The control device may also perform control functions (for example, temperature control, balancing control, charge/discharge control, and the like), protection functions (for example, over-discharge, over-charge, over-current protection, short-circuit, fire extinguishing functions, and the like), and the like, based on the state monitoring results. The control device may also perform wired or wireless communication with external devices of the battery pack 2000 (for example, a higher-level controller, a vehicle, a charger, power conversion system (PCS), and the like).

Although not shown in the drawings, the battery pack 2000 may further include a pack insulator attached to at least one surface of the interior of the pack case 2100 and formed corresponding to a shape of the at least one surface of the interior of the pack case 2100. The description of the pack insulator is the same as or similar to the description of the insulator 1300 shown in FIG. 6 to FIG. 10.

For example, the pack insulator includes a single pack insulating layer or a plurality of pack insulating layers stacked one above another. The pack insulating layers include at least one material selected from the group consisting of aerogel, mica, vermiculite, talc, silica, quartz, rock wool, alumina, feldspar, kaolin, kieselguhr, perlite, natural fiber, fiberglass, glass fiber, glass wool, carbon fiber, graphite fiber, mineral fiber, and polymer fiber.

Each of the pack insulating layers may be formed to a thickness of 0.5 mm to 2.5 mm.

In addition, for example, the pack insulator may further include a pack insulating film that is vacuum-packed while surrounding the pack insulating layer. The pack insulating film may be formed of, for example, the same material as or a similar material to the pack insulator.

In addition, the battery module 1000 received in the battery pack 2000 may include the battery module 1000 illustrated in FIG. 5 and/or the battery module 1000 illustrated in FIG. 6 to FIG. 10.

With this configuration, the battery pack 2000 according to the embodiment of the technology described herein can prevent a fire generated inside the battery pack 2000 from spreading outside the battery pack 2000.

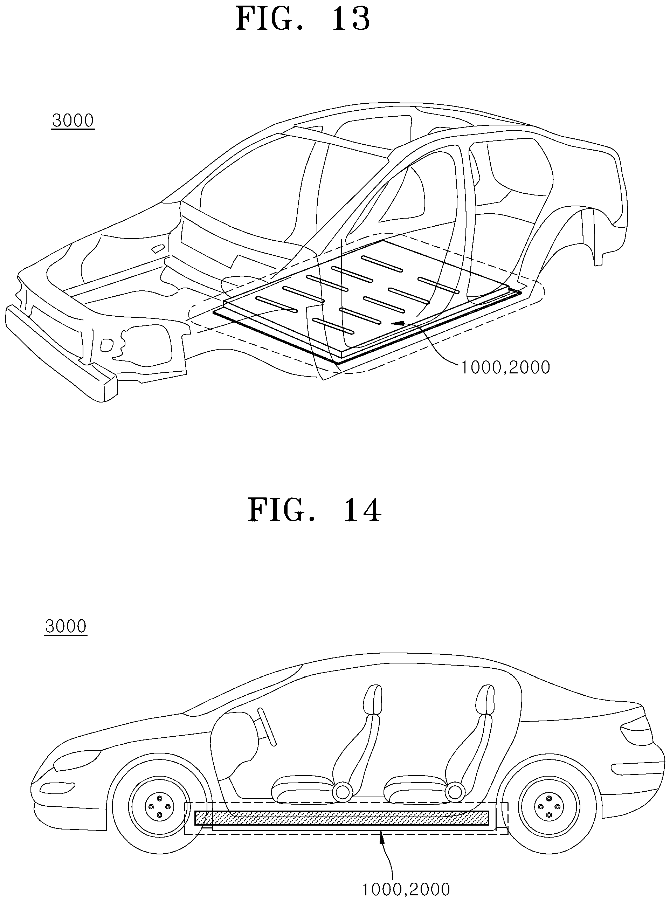

FIG. 13 is a perspective view of a vehicle body and body parts according to an embodiment of the technology described herein.

FIG. 14 is a side view of the vehicle body and the body parts according to the embodiment of the technology described herein.

The battery pack 2000 according to the embodiment of the technology described herein illustrated in FIG. 11 and FIG. 12 may be mounted on an automobile 3000. The automobile 3000 may be, for example, an electric automobile, a hybrid automobile, or a plug-in hybrid automobile. The automobile may include a four-wheeled automobile or a two-wheeled automobile.

As shown in FIG. 13 and FIG. 14, the automobile 3000 according to one embodiment includes the battery module 1000 according to the embodiment of the technology described herein and/or the battery pack 2000 including the battery modules 1000. The automobile 3000 operates by receiving power from the battery modules 1000 and/or the battery pack 2000 including the battery modules 1000 according to the embodiment of the technology described herein.

Although the technology described herein has been described with reference to some embodiments and drawings illustrating aspects thereof, the technology described herein is not limited thereto. Various modifications and variations can be made by a person skilled in the art to which the technology described herein belongs within the scope of the claims and equivalents thereto.

## Claims

1. A battery module comprising:
a housing for receiving at least one battery cell;
a top cover covering an opening of the housing; and
an insulator disposed on at least one surface of the top cover, the insulator being formed to correspond to a shape of at least a portion of the at least one surface of the top cover.

2. The battery module according to claim 1, wherein the insulator comprises at least one insulating layer, the at least one insulating layer comprises a single insulating layer or a plurality of insulating layers stacked one above another.

3. The battery module according to claim 1 or 2, wherein the at least one insulating layer is formed to a thickness of 0.5 mm to 2.5 mm.

4. The battery module according to claim 2 or 3, wherein the at least one insulating layer comprises at least one material selected from the group consisting of aerogel, mica, vermiculite, talc, silica, quartz, rock wool, alumina, feldspar, kaolin, kieselguhr, perlite, natural fiber, glass fiber, glass wool, carbon fiber, graphite fiber, mineral fiber, and polymer fiber.

5. The battery module of claim 4, wherein:
the at least one insulating layer comprises the natural fiber, and wherein the natural fiber comprises fibers formed of at least one material selected from the group consisting of hemp, jute, flax, coir, wool, and cellulose;
the at least one insulating layer comprises the mineral fiber, and wherein the mineral fiber comprises fibers formed of at least one material selected from the group consisting of basalt, quartz, boron, ceramic, diorite, alumina, silica, slag, and rock;
and/or
the at least one insulating layer comprises the polymer fiber, and wherein the polymer fiber comprises at least one fiber selected from the group consisting of aramid fiber, polypropylene fiber, polyethylene fiber, polyester fiber, acrylic fiber, rayon fiber, and polyvinyl acetate fiber

6. The battery module according to any one of the claims 2 to 5, wherein the insulator further comprises an insulating film formed on at least one surface of the at least one insulating layer.

7. The battery module according to claim 6, wherein the insulating film is vacuum-packed while surrounding the at least one insulating layer.

8. The battery module according to claim 6 or 7, wherein the insulating film is formed to a thickness of from 0.05 mm to 0.2 mm.

9. The battery module according to any one of the claims 6 to 8, wherein the insulating film comprises at least one material selected from the group consisting of aerogel, mica, vermiculite, talc, silica, quartz, rock wool, alumina, feldspar, kaolin, kieselguhr, perlite, natural fiber, glass fiber, glass wool, carbon fiber, graphite fiber, mineral fiber, and polymer fiber.

10. The battery module according to any one of the preceding claims, further comprising:
a bonding layer for securing the insulator to the at least one surface of the top cover,
and wherein optionally the bonding layer comprises at least one material selected from the group consisting of polyurethane, epoxy and polyolefin resins.

11. The battery module according to any one of the preceding claims, wherein the insulator is formed to correspond to the shape of the at least one surface of the top cover by vacuum pressing.

12. A battery pack comprising:
a battery module comprising at least one battery cell;
a pack case receiving the battery module; and
a pack insulator attached to at least one inner surface of the pack case, the pack insulator being formed to correspond to a shape of the at least one inner surface of the pack case.

13. The battery pack according to claim 11, wherein the pack insulator comprises at least one insulating layer, the at least one insulating layer comprising single insulating layer or a plurality of pack insulating layers stacked one above another,

14. The battery pack according to claim 11, wherein at least one of:
the at least one insulating layer comprises at least one material selected from the group consisting of aerogel, mica, vermiculite, talc, silica, quartz, rock wool, alumina, feldspar, kaolin, kieselguhr, perlite, natural fiber, fiberglass, glass fiber, glass wool, carbon fiber, graphite fiber, mineral fiber, and polymer fiber; and
the at least one insulating layer is formed to a thickness of 0.5 to 2.5 mm.

15. The battery pack according to claim 12 or 13, wherein the pack insulator further comprises: a pack insulating film vacuum-packed while surrounding the at least one insulating layer,
and wherein optionally the pack insulating film is formed to a thickness of 0.05 mm to 0.2 mm.
